# EUROPÄISCHE PATENTANMELDUNG

(11) **EP 4 344 810 A1**
(43) Veröffentlichungstag der Anmeldung: **03.04.2024**
(21) Anmeldenummer: 23199220.7
(22) Anmeldetag: 22.09.2023
(51) Int. Cl.: B23D 59/00, B27B 5/06, F16P 3/14, G05B 19/406

(54) **PLATTENAUFTEILSÄGE MIT VERSCHWENKBARER EIN- UND AUSGABEVORRICHTUNG**

(30) Priorität: 27.09.2022 DE 102022124875
(71) Anmelder: HOMAG Plattenaufteiltechnik GmbH, 75365 Calw (DE)
(72) Erfinder: Roller, Patrick, 75394 Oberreichenbach (DE); Kaiser, Jonathan, 71083 Herrenberg (DE); Seid, Torsten, 75365 Calw/Holzbronn (DE); Groß, Mathias, 72218 Wildberg (DE)
(74) Vertreter: DREISS Patentanwälte PartG mbB

(57) **Zusammenfassung**

Es wird eine Plattenaufteilsäge vorgeschlagen, mit einer Schwenkvorrichtung an der ein Bedienpult angeordnet ist.

Durch eine erfindungsgemäße Anordnung von Schwenkvorrichtung und Bedienpult ist es möglich, diese in verschiedene Schwenkpositionen zu bringen und entsprechend dem jeweiligen Arbeitsmodus ein ergonomisch günstiges Arbeiten an der Plattenaufteilsäge zu ermöglichen.

## Beschreibung

Die Erfindung betrifft eine Plattenaufteilsäge mit einer Schwenkvorrichtung und einer Ein- und Ausgabevorrichtung zum Bedienen der Plattenaufteilsäge nach dem Oberbegriff des Anspruchs 1. Die hier relevanten Plattenaufteilsägen umfassen zwei oder mehr Abnahmetische, einen Druckbalken, ggf. einen Winkelbalken an dem die Platte anliegt und eine Ein- und Ausgabevorrichtung, die an einer Schwenkvorrichtung schwenkbar angelenkt bzw. gelagert ist. Diese Aufzählung von Baugruppen einer Plattenaufteilsäge ist nicht vollständig und umfasst nur die im Zusammenhang mit der Erfindung wesentlichen Baugruppen.

Dem Fachmann sind der Aufbau und die Funktionsweise von Plattenaufteilsägen bekannt. Daher ist eine umfassende Erläuterung an dieser Stelle nicht erforderlich. Nur so viel sei gesagt:
Der Druckbalken dient dazu, die aufzuteilende Platte während des Sägevorgangs auf der Schnittlinie niederzuhalten und gegen Verschieben zu sichern. Unter anderem aus Gründen der Arbeitssicherheit ist der Druckbalken von einer Verkleidung umgeben. Unterhalb der Druckbalkenverkleidung kann ein Sicherheitsvorhang sein,
der verhindert, dass die Hand des Bedieners in den Wirkbereich des Druckbalkens oder in den Bereich eines Sägeblatts, welches parallel zu dem Druckbalken entlang der Sägelinie bewegbar ist, gelangt. Der Sicherheitsvorhang ist während des Aufteilvorgangs geschlossen und wird durch eine Schwenkbewegung nach oben geöffnet, um die Zuführung oder Entnahme des Materials (Platte, Plattenstreifen oder Werkstück) an der Maschine zu ermöglichen.

Die Schnittlinie und der Winkelbalken sind in der Regel rechtwinklig zueinander angeordnet. Der Winkelbalken bildet einen Anschlag bzw. eine Anlage für eine Platte oder einen Streifen eines plattenförmigen Werkstücks. Mit seiner Hilfe können Schnitte vorgenommen werden, die senkrecht/orthogonal zu der am Winkelbalken anliegenden Schneidkante der Platte oder des Streifens verlaufen.

Die Ein- und Ausgabevorrichtung hat mehrere Funktionen. Sie dient der Steuerung der Plattenaufteilsäge. Über die Ein-und Ausgabevorrichtung kann der Maschinenbediener Eingaben vornehmen, um beispielsweise die Breite eines Streifens einzustellen, der von der aufzuteilenden Platte abgeschnitten werden soll. Es können aber auch ganze Schnittfolgen bzw. ein Schnittplan über die Ein- und Ausgabevorrichtung eingegeben werden. Daher umfassen die am Markt verfügbaren Ein- und Ausgabevorrichtungen eine Bildschirmaufnahme für einen Bildschirm und eine Tastaturablage. Auf der Tastaturablage befindet sich eine Tastatur, mit deren Hilfe Eingaben für die Steuerung der Plattenaufteilsäge vorgenommen werden. Auf dem Bildschirm, der von der Bildschirmaufnahme getragen oder gehalten wird, werden diese Eingaben und andere Informationen sichtbar gemacht.

Darüber hinaus dient der Bildschirm zur Informationsübermittlung an den Maschinenbediener. So erhält der Maschinenbediener während der automatischen Aufteilung einer Platte über den Bildschirm fortlaufend u.a. Informationen darüber, wie geschnittene Streifen auf den Abnahmetischen gepuffert werden sollen, in welcher Reihenfolge Streifen in die Maschine für die Queraufteilung zugeführt werden sollen, welches Werkstück gerade zugeschnitten wird und ob dieses Werkstück fertig ist und abgestapelt werden kann oder ob es weiterbearbeitet werden muss.

Der Maschinenbediener erhält über den Bildschirm zum Beispiel die Information, dass das oder die gesägten Werkstücke um 90° geschwenkt nochmals der Plattenaufteilsäge zugeführt werden müssen, um sie auf die gewünschte Länge abzulängen. Bisweilen ist es auch erforderlich, an den Werkstücken einen sogenannten dritten Schnitt vorzunehmen. Auch diese Information wird dem Maschinenbediener am Bildschirm angezeigt.

Schon aus dieser kurzen Schilderung wird deutlich, dass dem Maschinenbediener während der automatischen Aufteilung einer Platte über den Bildschirm eine erhebliche Menge an Informationen übermittelt werden, die er unmittelbar in entsprechende Handlungen (Zuführung der Streifen für Queraufteilung, Abstapeln des fertigen Werkstücks, Weiterbearbeiten des noch unfertigen Werkstücks) umsetzen muss. Eine fehlerhafte Umsetzung führt in der Regel zu Fehlern im Werkstück und in Folge dessen zu Ausschuss.

Bei herkömmlichen Plattenaufteilsägen ist der Bildschirm bzw. die Ein- und Ausgabevorrichtung bei der automatischen Aufteilung von Platten parallel zu dem Winkelbalken ausgerichtet und oberhalb der Abnahmetische angeordnet. Die unfertigen oder fertigen Werkstücke werden unterhalb des Druckbalkens von der Plattenaufteilsäge in Richtung der Aufnahmetische und somit in Richtung des Maschinenbedieners bewegt, der sie dann manuell handhabt, z.B. abstapelt, puffert oder dreht und für einen weiteren Schnitt mit der Plattenaufteilsäge weiterbearbeitet. Bei dieser Konfiguration sind die Sägeschnitte und die Werkstücke auf dem Bildschirm gegenüber den realen auf den Abnahmetischen liegenden Werkstücke um 90° verdreht dargestellt. Dies bedeutet, dass der Maschinenbediener die am Bildschirm angezeigten Informationen nicht direkt in Handlungen umsetzen kann. Er muss vielmehr permanent "um die Ecke" denken und die verdrehte Darstellung berücksichtigen. Das belastet den Maschinenbediener und erhöht die Fehlerquote.

Ein weiterer Nachteil dieser Anordnung ist darin zu sehen, dass die Tastatur und weitere Bedienelemente, die ebenfalls an der Ein- und Ausgabevorrichtung angeordnet sind, insbesondere für nicht hochgewachsene Maschinenbediener nur schwer erreichbar sind.

Um dieser ungünstigen Situation abzuhelfen, ist an manchen am Markt befindlichen Maschinen vorgesehen, dass die Schwenkvorrichtung mit der daran angeordneten Ein- und Ausgabevorrichtung in eine Position oberhalb des ersten Abnahmetisches geschwenkt werden kann. Dadurch ist die Ein-und Ausgabevorrichtung näher an dem Maschinenbediener, der sich in der Regel in einer Gasse zwischen dem ersten und dem zweiten Abnahmetisch der Plattenaufteilsäge befindet.

Nachteilig an dieser Positionierung wiederum ist, dass sich die Ein- und Ausgabevorrichtung oberhalb des Abnahmetisches und in unmittelbarer Nähe des Winkelbalkens befindet. Genau dort muss der Maschinenbediener in der Regel Streifen der Platte oder fertig zugeschnittene Werkstücke entnehmen und gegebenenfalls an den Winkelbalken anlegen. Anders ausgedrückt: In dieser Schwenkposition ist die Ein- und Ausgabevorrichtung eine Störkontur in dem Arbeitsraum, welche den Maschinenbediener bei der Arbeit behindert.

Der Erfindung liegt die Aufgabe zugrunde, eine Plattenaufteilsäge mit einer Ein- und Ausgabevorrichtung bereitzustellen, welche die Nachteile des Standes der Technik vermeidet und insbesondere ein ergonomisches Arbeiten in den verschiedenen Arbeitsmodi einer Plattenaufteilsäge ermöglicht.

Diese Aufgabe wird erfindungsgemäß bei einer Plattenaufteilsäge, umfassend mindestens eine Schnittlinie, zwei Abnahmetische, eine Druckbalkenverkleidung, einen Winkelbalken, eine Schwenkvorrichtung und eine Bildschirmaufnahme für einen Bildschirm, wobei der Winkelbalken orthogonal zu der Druckbalkenverkleidung angeordnet ist, wobei die Schwenkvorrichtung an einem Anlenkpunkt schwenkbar gelagert ist, und wobei die Bildschirmaufnahme an einem dem Anlenkpunkt gegenüberliegenden Ende der Schwenkvorrichtung schwenkbar gelagert ist, dadurch gelöst, dass die Lage des Anlenkpunkts relativ zu der Druckbalkenverkleidung und relativ zu dem Winkelbalken sowie eine Länge der Schwenkvorrichtung so aufeinander abgestimmt sind, dass die Bildschirmaufnahme in einer ersten Schwenkposition der Schwenkvorrichtung zwischen zwei benachbarten Abnahmetischen sowie vor der Druckbalkenverkleidung positioniert ist, dass die Bildschirmaufnahme in einer zweiten Schwenkposition parallel zum Winkelbalken und in der Nähe des Winkelbalkens positioniert ist.

Die erfindungsgemäße Anordnung des Anlenkpunkts, die sich aus den im Anspruch enthaltenen geometrischen Relationen ergibt, bringt in den verschiedenen Arbeitsmodi der Plattenaufteilsäge wesentliche Vorteile mit sich.

In der ersten Schwenkposition befindet sich der Bildschirm der Ein- und Ausgabevorrichtung in einer Gasse, die zwischen dem ersten und dem zweiten Aufnahmetisch gebildet wird. Der Bildschirm befindet sich unmittelbar vor dem Druckbalken, bzw. vor der Druckbalkenverkleidung. Dies bedeutet, dass die bei der automatischen Aufteilung einer Platte auf dem Bildschirm dargestellte Schnittfolge, animierte Maschineabläufe und Handlings-/Handhabungsanweisungen die unter dem Druckbalken in Richtung des Maschinenbedieners herauskommenden Plattenstreifen oder Werkstücke gleich ausgerichtet sind. Dadurch kann der Maschinenbediener die Information auf dem Bildschirm direkt auf den Streifen bzw. die Werkstücke, die sich vor ihm auf dem oder den Abnahmetischen befinden, übertragen. Eine Transferleistung, wie sie aus dem Stand der Technik erforderlich ist, wenn der Bildschirm und der Druckbalken um 90° zueinander versetzt angeordnet sind, ist nicht erforderlich. Diese ergonomische Anordnung des Bildschirms, die vor allem bei der automatischen Aufteilung einer Platte (automatische Betriebsweise) zum Einsatz kommt, erleichtert dem Maschinenbediener die Arbeit erheblich, sie verringert die Fehlerquote und steigert damit die Produktivität und Effizienz der Plattenaufteilsäge.

Weiterhin ist diese Position vorteilhaft bei der Bedienung der Maschine ohne Tastatur und Maus durch einen berührungsempfindlichen Bildschirm (Touch Monitor). Dabei steht der Maschinenbediener direkt vor dem Bildschirm und der Handlingsbereich /der Arbeitsraum am ersten Abnahmetisch wird nicht durch die Ein- und Ausgabevorrichtung behindert bzw. gestört.

In einem sogenannten manuellen Betrieb wird die Schwenkvorrichtung und mit ihm die Ein- und Ausgabevorrichtung samt Bildschirm so verschwenkt, dass sie sich in der Nähe des Winkelbalkens befindet. In dieser zweiten Schwenkposition befindet sich die Ein- und Ausgabevorrichtung außerhalb des über dem ersten Abnahmetisch vorhandenen Arbeitsraums. Durch diesen Arbeitsraum müssen die Plattenstreifen oder Werkstücke hindurchbewegt werden, sowohl wenn sie aus dem Bereich vor dem Druckbalken entnommen als auch wenn sie an den Winkelbalken angelegt werden. Daher ist eine Störkontur in diesem Arbeitsraum sehr hinderlich. In der zweiten Schwenkposition der Schwenkvorrichtung bzw. der Ein- und Ausgabevorrichtung wird der Arbeitsraum über den Abnahmetischen nicht gestört. Dies ermöglicht ein sehr einfaches Arbeiten.

Bei dem manuellen Betrieb muss der Maschinenbediener z. B. die Breite des zu sägenden Streifens manuell eingeben. Dies kann der Maschinenbediener ohne Weiteres machen, indem er sich über den ersten Abnahmetisch beugt und die gewünschten Maße über die Tastatur und/oder den Touch-Bildschirm eingibt.

Wenn anschließend der gewünschte Streifen gesägt ist, kann der Maschinenbediener ihn ungehindert von dem oder den Abnahmetischen abnehmen, ggf. um 90° verdrehen und erneut der Plattenaufteilsäge zuführen. Es ist also auch in dem manuellen Betrieb der Plattenaufteilsäge ein ergonomisch günstiges und störungsfreies Arbeiten möglich.

Bei der manuellen Eingabe von Abmessungen des Werkstücks muss der Maschinenbediener die Werkstückform im Kopf haben. Erst dann kann er die Werte über die Tastatur oder den Bildschirm eingeben. Bei der manuellen Eingabe ist der Informationsfluss anders als beim automatischen Arbeiten. Der Maschinenbediener hat eine Vorstellung von dem Werkstück, das er zuschneiden will und gibt die entsprechenden Maße über die Tastatur in die Steuerung ein. Daher ist der Winkel-Versatz von 90° zwischen Ein- und Ausgabevorrichtung und dem Druckbalken bei der manuellen Arbeitsweise nicht hinderlich.

Zusätzlich zu der automatischen und der manuellen Arbeitsweise gibt es noch eine weitere Arbeitsweise. Sie hat das Programmieren einer Schnittfolge für die Aufteilung einer Platte über die Ein- und Ausgabevorrichtung zum Gegenstand.

Im Betriebsmodus "Programmieren eines Schnittfolge" ist es oft vorteilhaft, wenn die Ein- und Ausgabevorrichtung eine Zwischenstellungzwischen der ersten Schwenkposition und der zweiten Schwenkposition einnimmt. Dann befindet sie sich über dem ersten Abnahmetisch. Das stört in diesem Betriebsmodus nicht, weil keine Platten oder Werkstücke entnommen oder zugeführt werden.

Die erfindungsgemäße Anordnung des Anlenkpunkts ermöglicht demnach in drei verschiedenen Arbeitsmodi der Plattenaufteilsäge drei ergonomisch günstige und dem Arbeiten an der Plattenaufteilsäge förderliche Schwenkposition der Schwenkvorrichtung.

In weiterer vorteilhafter Ausgestaltung der Erfindung umfasst die Schwenkeinrichtung ein Zentralmodul.

Die Schwenkvorrichtung kann einen oberen Schwenkarm und/oder einen unteren Schwenkarm umfassen. Wenn die Schwenkvorrichtung nur einen oberen Schwenkarm aufweist, dann wird diese Konfiguration im Zusammenhang mit der Erfindung auch als "Galgen" bezeichnet.

Das Zentralmodul kann an dem oberen und/oder dem unteren Schwenkarm angeordnet sein.

An dem Zentralmodul kann die Bildschirmaufnahme angeordnet sein. Dadurch ergibt sich eine kompakte und robuste Bauweise.

Ein weiterer Vorteil der erfindungsgemäßen Anordnung besteht darin, dass die Länge der Schwenkvorrichtung, bzw. des oder der Schwenkarme im Vergleich zu vielen am Markt befindlichen Schwenkvorrichtungen reduziert werden kann. Außerdem begrenzt das optionale Zentralmodul in der zweiten Schwenkposition die Ein- und Ausgabevorrichtung und schützt sie dadurch gegen Beschädigungen. Der relativ empfindliche Bildschirm befindet sich unterhalb des oberen Schwenkarms/des Galgens und wird seitlich von dem Zentralmodul geschützt. Dies führt zu einer deutlichen Verringerung von Beschädigungen des Bildschirms.

Dazu ist anzumerken, dass der Maschinenbediener Ausschuss oder Reststücke der Platte häufig in einen Abfallbehälter wirft, der sich hinter dem Winkelbalken befindet. In der Praxis kommt es immer wieder vor, dass aus Versehen, ein Reststück den Bildschirm trifft und diesen beschädigen. Durch die erfindungsgemäße Anordnung dient das Zentralmodul gewissermaßen als mechanischer Schutz des Bildschirms und verringert dadurch die Gefahr von Beschädigungen des Bildschirms.

In weiterer vorteilhafter Ausgestaltung der Erfindung ist die Bildschirmaufnahme in der Höhe verstellbar und/oder um eine horizontal verlaufende Achse schwenkbar mit der Schwenkvorrichtung oder dem Zentralmodul verbunden. Dadurch kann die Höhe des Bildschirms auf die individuellen Bedürfnisse des Maschinenbedieners angepasst werden. Beispielsweise können hochgewachsene Personen den Bildschirm etwas höher anordnen als weniger hochgewachsene Personen.

Das Verschwenken des Bildschirms, beispielsweise um einen Winkel von +/-10° oder bevorzugt von +/-5°, hilft Spiegelungen oder Blendeffekte auf dem Bildschirm zu vermeiden.

Wenn der Bildschirm ein berührungsempfindlicher Bildschirm (Touch Screen) ist, dann ist keine Tastatur und demzufolge auch keine Tastaturablage erforderlich.

In einzelnen Anwendungsfällen oder wenn der Bildschirm kein Touch Screen ist, kann es Regel erforderlich sein, Eingaben über eine Tastatur vorzunehmen. Dazu ist unterhalb der Bildschirmaufnahme eine Tastaturablage an dem Zentralmodul eine in der Regel nicht in der Höhe verstellbare Tastaturablage vorgesehen. Sie stellt damit gewissermaßen einen unteren mechanischen Schutz für den Bildschirm dar, der sich oberhalb der Tastaturablage befindet. Die Tastaturablage hat also über ihre eigentliche Funktion hinaus auch noch eine Schutzfunktion für den Bildschirm.

Die Tastaturablage ist in vertikaler Richtung so positioniert, dass sie sich in der ersten Schwenkposition vertikal über dem Sicherheitsvorhang bzw. seinem Bewegungsbereich befindet und nicht mit ihm kollidieren kann.

Damit die Tastaturablage möglichst schmal gehalten werden kann und wenig Platz beansprucht, ist in vorteilhafter Ausgestaltung der Erfindung vorgesehen, dass die Tiefe des Zentralmoduls in einem Bereich unterhalb der Bildschirmaufnahme und direkt oberhalb der Tastaturablage kleiner ist als im Bereich der Bildschirmaufnahme. Dadurch wird die Tiefe der Tastaturablage minimiert.

Besonders bevorzugt ist es, wenn die Hinterkante der Tastaturablage und die Hinterseite der Bildschirmaufnahme etwa in einer Ebene liegen.

Beide Maßnahmen führen zu einer Verkleinerung der Störkontur der Ein- und Ausgabevorrichtung und erleichtern ein störungsfreies Arbeiten an der Plattenaufteilsäge.

An der Bildschirmaufnahme und/oder der Tastaturablage können Griffelemente vorgesehen sein, mit deren Hilfe der Maschinenbediener die Ein- und Ausgabevorrichtung entsprechend seinen Bedürfnissen positionieren kann. Dadurch muss der Maschinenbediener nicht den Bildschirm anfassen, um die Ein- und Ausgabevorrichtung zu positionieren. Auch das schont den Bildschirm und erhöht dessen Lebensdauer.

In weiterer vorteilhafter Ausgestaltung der Erfindung ist die Länge des oberen oder unteren Schwenkarms der Schwenkvorrichtung größer als eine Länge der Bildschirmaufnahme und/oder der Tastaturablage. Dann ist es möglich, dass die Ein- und Ausgabevorrichtung in der zweiten Schwenkposition einerseits unter dem oberen Schwenkarm/unter dem Galgen Platz findet und auf diese Weise von oben geschützt ist und auf der Seite von dem Zentralmodul gegen mechanische Beschädigungen weitestgehend geschützt ist.

In vielen Anwendungsfällen hat es sich als vorteilhaft erwiesen, wenn eine Länge des oberen oder unteren Schwenkarms der Schwenkvorrichtung größer oder gleich einer Breite des ersten Aufnahmetisches ist. Dann ist die Ein-und Ausgabevorrichtung in der ersten Schwenkposition bzw. dessen Bildschirm ziemlich genau mittig in der Gasse zwischen dem ersten Abnahmetisch und dem zweiten Abnahmetisch positioniert.

Der Anlenkpunkt kann entweder an einem Fuß des Maschinengestells, der Druckbalkenverkleidung, auf dem Schaltschrank, dem Winkelbalken, an dem ersten Abnahmetische oder einem separaten Mast angeordnet werden. Je nachdem, welcher der beiden Varianten im Einzelfall der Vorzug gegeben wird, hängt von den Randbedingungen des Einzelfalls ab. Wenn ein Mast zum Einsatz kommt, dann kann die erfindungsgemäße Schwenkvorrichtung auch an bereits in Serie gefertigten Maschinen ohne konstruktive Änderungen an der Maschine nachgerüstet werden, ein Eingriff in die Struktur des Maschinengestells ist dann nicht erforderlich.

In der ersten Schwenkposition sind der Bildschirmaufnahme und die optionale Tastaturablage parallel zur Druckbalkenverkleidung ausgerichtet. In der zweiten Schwenkposition sind der Bildschirmaufnahme und die Tastaturablage im Wesentlichen parallel zum Winkelbalken und auch parallel zu der darüber befindlichen Schwenkvorrichtung ausgerichtet.

An dem Zentralmodul, das bevorzugt einen quadratischen oder rechteckigen Querschnitt hat, sind optional einige für den Betrieb der Plattenaufteilsäge wichtige Bedienelemente angeordnet: Zwei Schalter zum Ein-und Aschalten der Steuerspannung, ein Schalter oder Taster "Ablaufstart", ein Schalter oder Taster "Ablaufstopp" ein Not-Aus-Taster, ein Taster "Fehlerquittierung" und ggf. weitere Bedienelemente. Weil das Zentralmodul und die Bildschirmaufnahme immer unmittelbar vor dem Maschinenbediener positioniert sind, kann der Maschinenbediener jederzeit alle wichtigen Schalter und Taster gut und bei Bedarf auch schnell erreichen.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen offenbarten Merkmale können sowohl einzeln als auch in beliebiger Kombination miteinander erfindungswesentlich sein.

### Zeichnung

Es zeigen:
- Figur 1: eine Isometrie eines Ausschnitts einer erfindungsgemäßen Plattenaufteilsäge, bei der sich die Ein- und Ausgabevorrichtung in der ersten Schwenkposition befindet;
- Figur 2: eine Ansicht von vorne auf die Plattenaufteilsäge mit der Ein- und Ausgabevorrichtung in der ersten Schwenkposition;
- Figur 3: eine isometrische Darstellung eines Ausschnitts einer Plattenaufteilsäge, bei der sich die Ein- und Ausgabevorrichtung in einer Zwischenposition befindet;
- Figur 4: eine Isometrie eines Ausschnitts einer erfindungsgemäßen Plattenaufteilsäge, wobei sich die Ein- und Ausgabevorrichtung in der zweiten Schwenkposition befindet;
- Figur 5: eine Ansicht von vorne der Plattenaufteilsäge mit der Ein- und Ausgabevorrichtung in der zweiten Schwenkposition Position;
- Figuren 6 bis 9: umfassen Ansichten der erfindungsgemäßen Schwenkvorrichtung sowie der Ein- und Ausgabevorrichtung und
- Figur 10: eine Ansicht von vorne der Plattenaufteilsäge bei der sich die Ein- und Ausgabevorrichtung in eine Transportstellung befindet.

### Beschreibung der Ausführungsbeispiele

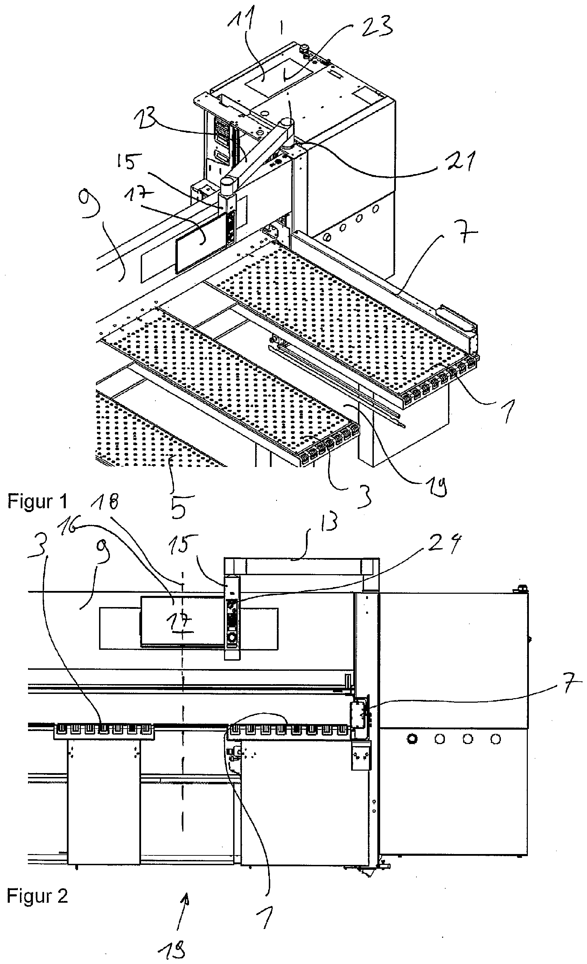

In der Figur 1 ist ein Ausschnitt einer erfindungsgemäßen Plattenaufteilsäge dargestellt, wobei sich der Ausschnitt auf die Bereiche und Baugruppen beschränkt, die für die Erfindung von Bedeutung sind. Dem einschlägigen Fachmann ist der Aufbau und die Funktionsweise von Plattenaufteilsägen bekannt, so dass auf eine umfassende Beschreibung hier verzichtet werden kann.

Die Plattenaufteilsäge umfasst mehrere Abnahmetische 1, 3 und 5 mit einer bevorzugt bedüsten Auflagefläche für Werkstücke, einen Winkelbalken 7, an dem Werkstücke ausgerichtet werden können, einen Maschinentisch mit einer Sägevorrichtung und einer Sägelinie und einen Druckbalken oberhalb des Maschinentisches. Der Winkelbalken 7 ist an jener Seite des Abnahmetisches 1 angeordnet, der nicht dem Abnahmetisch 3 zugewandt ist und die orthogonal zu der Sägelinie verläuft. Der Druckbalken, die Schnittlinie und das Sägeblatt, welches die Platten aufteilt sind in der Ansicht von Fig. 1 nicht sichtbar und werden durch die Druckbalkenverkleidung 9 bzw. einer Verkleidung des Maschinentisches verdeckt. Die Schnitte, die das Sägeblatt in den Werkstücken vornimmt, verlaufen parallel zur Längserstreckung des Druckbalkens bzw. der Druckbalkenverkleidung 9.

Der Winkelbalken 7 dient als Anschlag, so dass Platten oder Werkstücke, die an dem Winkelbalken 7 angelegt werden, anschließend durch einen Schnitt des Sägeblatts rechtwinklig zu der am Winkelbalken 7 anliegenden Kante der Platte durchtrennt werden können.

Im hinteren Teil der Figur 1 ist ein Schaltschrank oder eine Steuerung 11 zu sehen. Ein Maschinengestell oder ein Maschinenfuß, der z.B. den Druckbalken trägt, und an dem auch der Winkelbalken 7 befestigt ist, sind ebenfalls nicht sichtbar. Sie sind von Verkleidungen verdeckt.

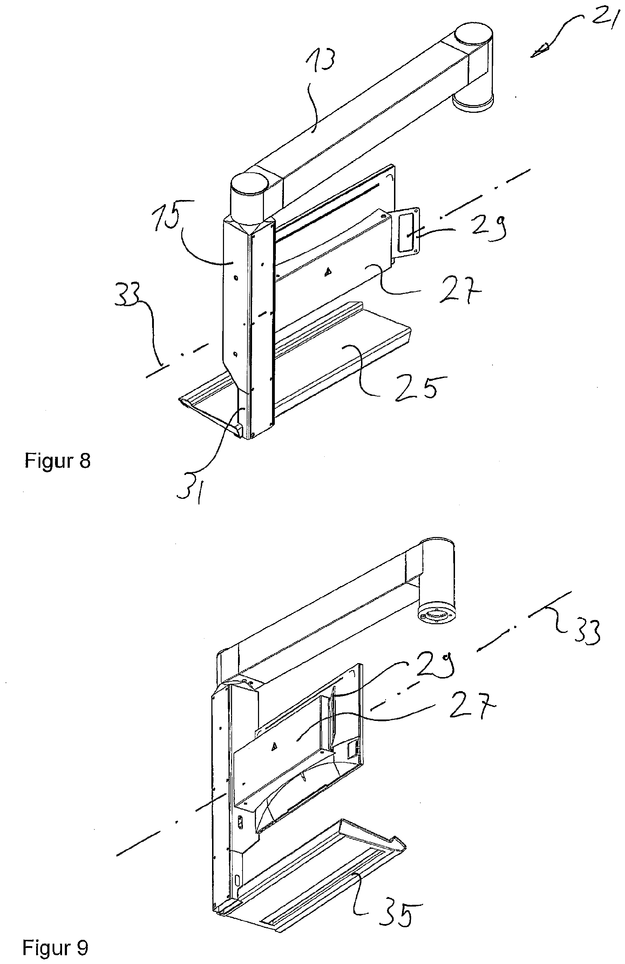

Die Plattenaufteilsäge umfasst weiter eine Schwenkvorrichtung, die einen oberen Schwenkarm umfasst, der nachfolgend als Galgen 13 bezeichnet wird. An dem Galgen 13 ist bevorzugt ein sich bevorzugt vertikal erstreckendes Zentralmodul 15 angeordnet. An diesem Zentralmodul 15 ist ein Bildschirm 17 bevorzugt mittelbar über einen Bildschirmaufnahme 27 (siehe die Figuren 8 und 9) befestigt, die sich bevorzugt horizontal erstreckt.

Zwischen dem ersten Abnahmetisch 1 und dem zweiten Abnahmetisch 3 ist eine Gasse 19 vorhanden. Durch diese Gasse kann der Maschinenbediener (nicht dargestellt) bis zum Druckbalken bzw. zur Druckbalkenverkleidung 9 gelangen und die unter dem Druckbalken 9 herausgeförderten Streifen bzw. plattenförmigen Werkstücken herausnehmen und abstapeln, drehen, auf den Abnahmetischen 1, 3, 5 zwischenpuffern oder an dem Winkelbalken 7 anlegen, so dass die Werkstücke bei einer nachfolgenden Bearbeitung auf die gewünschte Länge abgeschnitten werden können.

Wenn sich der Maschinenbediener in der Gasse 19 bei der in Fig. 1 bzw. Fig. 2 dargestellten Position des Bildschirms 17 befindet, blickt er direkt auf den Bildschirm 17, der gewissermaßen in der Verlängerung der Gasse 19 oberhalb der Abnahmetische 1, 3 und 5 und vor der Druckbalkenverkleidung 9 angeordnet ist. Unterhalb der Druckbalkenverkleidung 9 kommen die Plattenstreifen bzw. plattenförmigen Werkstücke heraus und müssen entsprechend dem Schnittfolgeplan gehandhabt werden. Handhaben bedeutet je nach Fortschritt des Schnittfolgeplans insbesondere Zwischenpuffern, Drehen, Ausrichten und Wiederzuführen zur Sägelinie oder Abstapeln des betreffenden Werkstücks.

Wenn das Werkstück noch nicht fertig ist, muss der Maschinenbediener dieses Werkstück in Anlage an den Winkelbalken 7 bringen, so dass in einem darauffolgenden Schnitt das Werkstück auf die gewünschte Länge abgelängt werden kann.

Diese Informationen erhält der Maschinenbediener über den Bildschirm 17. Weil die visuelle Darstellung des Schnittfolgeplans und die Anweisungen auf dem Bildschirm 17 betreffend die weitere Handhabung der Werkstücke/der Plattenstreifen und die Werkstücke, die unter dem Druckbalken 9 hervorkommen, gleich ausgerichtet sind und nicht, wie im Stand der Technik, um 90° verdreht dargestellt ist, ist es für den Maschinenbediener sehr einfach, die Informationen, die er dem Bildschirm 17 entnimmt, in die Handhabung der Plattenstreifen umzusetzen.

In der Figur 1 befindet sich der Bildschirm 17 bzw. die Ein- und Ausgabevorrichtung in der ersten Schwenkposition. Diese Schwenkposition ist eben dadurch gekennzeichnet, dass der Bildschirm 17 im Wesentlichen parallel zur Druckbalkenverkleidung 9 verläuft und in etwa in der Mitte der Gasse 19 angeordnet ist. Im "Wesentlichen parallel" bedeutet, dass ein Winkel zwischen der Sägelinie und einer Darstellungsfläche des Bildschirms kleiner 45°, bevorzugt kleiner 30° und weiter bevorzugt kleiner 15° und noch weiter bevorzugt kleiner 5° beträgt.

Die Ein- und Ausgabevorrichtung bzw. der Schwenkvorrichtung 13 befinden sich in der ersten Schwenkposition, wenn eine Aufteilung einer Platte durch die Plattenaufteilsäge vorgenommen wird und der Maschinenbediener während der Aufteilung der Platte über den Bildschirm Informationen erhält, wie er das nächste abgetrennte Werkstück handhaben muss, das unter der Druckbalkenverkleidung 9 in Richtung der Gasse 19 aus dem Sägebereich der Plattenaufteilsäge herausgeschoben wird.

In der Figur 2 ist eine Ansicht von vorne auf den gleichen Ausschnitt der erfindungsgemäßen Plattenaufteilsäge dargestellt. In dieser Darstellung kann man gut erkennen, dass sich der Bildschirm bevorzugt über einem Öffnungsbereich eines Sicherheitsvorhangs befindet und sich ein mittlerer Bereich 16 des Bildschirms 17 mit einer vertikalen Ebene 18 schneidet, die sich mittig zwischen dem ersten Abnahmetisch 1 und dem zweiten Abnahmetisch 3 befindet und parallel zum Winkelbalken 7 verläuft. In dieser Darstellung ist auch gut zu erkennen, dass der obere Schwenkarm bzw. der Galgen 13 lediglich eine Länge benötigt, die in etwa der Breite des Abnahmetisches 1 entspricht. Die Länge des Galgens 13 und die Breite des Bildschirms 17 muss so gewählt werden, dass sich der Bildschirm 17 in der ersten Schwenkposition im Wesentlichen mittig oberhalb der Gasse 19 befindet und dass in der zweiten Schwenkposition der Bildschirm 17 bei einer im Wesentlichen parallel Orientierung zum Winkelbalken nicht an das Gehäuse der Plattenaufteilsäge anstößt und einen vordefinierten Abstand zum Gehäuse nicht unterschreitet. Der vordefinierte Abstand zum Gehäuse kann zum Beispiel 2, 3 oder 5 Zentimeter betragen.

Durch diese Ausführungsformen kann die Schwenkvorrichtung relativ kurz ausgestaltet werden, wodurch die Bildschirmaufnahme im Gegensatz zum Stand der Technik gleichzeitig steifer gestaltet werden kann.

Die Schwenkvorrichtung ist um eine Schwenkachse 23 drehbar an dem Anlenkpunkt 21 befestigt (siehe Fig. 1). In dem dargestellten Ausführungsbeispiel ist der Anlenkpunkt 21 am Maschinengestell der Plattenaufteilsäge befestigt. In dem dargestellten Ausführungsbeispiel umfasst die Ein- und Ausgabevorrichtung nur den Bildschirm 17 in Form eines berührungsempfindlichen (Touch-)Bildschirms, so dass eine Tastaturablage und eine Tastatur nicht vorhanden sein müssen.

In weiteren nicht dargestellten Ausführungsformen kann der Anlenkpunkt 21 an der Druckbalkenverkleidung, an dem Schaltschrank, am Winkelbalken, an dem ersten Abnahmetische oder einem separaten Mast angeordnet werden.

An dem Zentralmodul 15 sind bevorzugt einige Bedienelemente angebracht. Die wichtigsten wurden weiter oben in der Beschreibungseinleitung bereits erläutert. Exemplarisch ist ein Not-Aus-Taster mit dem Bezugszeichen 24 n der Fig. 2 dargestellt.

Bei diesem Ausführungsbeispiel wird die Ein- und Ausgabevorrichtung durch das Zentralmodul 15 und den Bildschirm 17 gebildet.

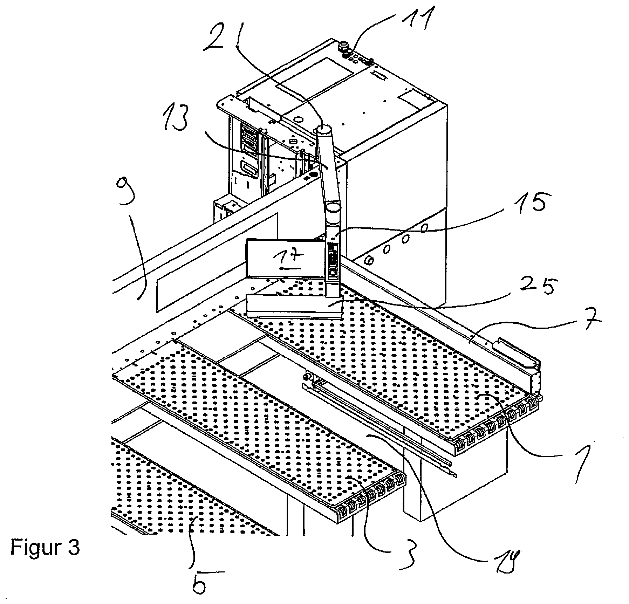

Bei dem in der Figur 3 dargestellten Ausführungsbeispiel umfasst die Ein- und Ausgabevorrichtung zusätzlich zu dem Zentralmodul 15 und den Bildschirm 17 noch eine Tastaturablage 25. Eine Tastatur ist zur Vereinfachung nicht dargestellt.

In der Figur 3 befindet sich die Ein- und Ausgabevorrichtung oberhalb des ersten Abnahmetisches 1. In dieser Zwischenposition hat der Maschinenbediener, der sich in der Gasse 19 befindet, einen sehr guten Zugriff auf die Ein- und Ausgabevorrichtung und insbesondere auf die auf der Tastaturablage 25 vorhandene Tastatur. In dieser Schwenkposition kann der Maschinenbediener Eingaben für die Steuerung 11 vornehmen. Er kann z. B. eine Schnittfolge programmieren. Diese Eingaben kann der Bediener alternativ auch in der Fig. 1 dargestellten Position der Ein- und Ausgabevorrichtung vornehmen.

Dass sich die Ein- und Ausgabevorrichtung oberhalb des ersten Abnahmetisches 1 befindet, stört im Vergleich zum Handhaben von Werkstücken beim Programmieren einer Schnittfolge nicht.

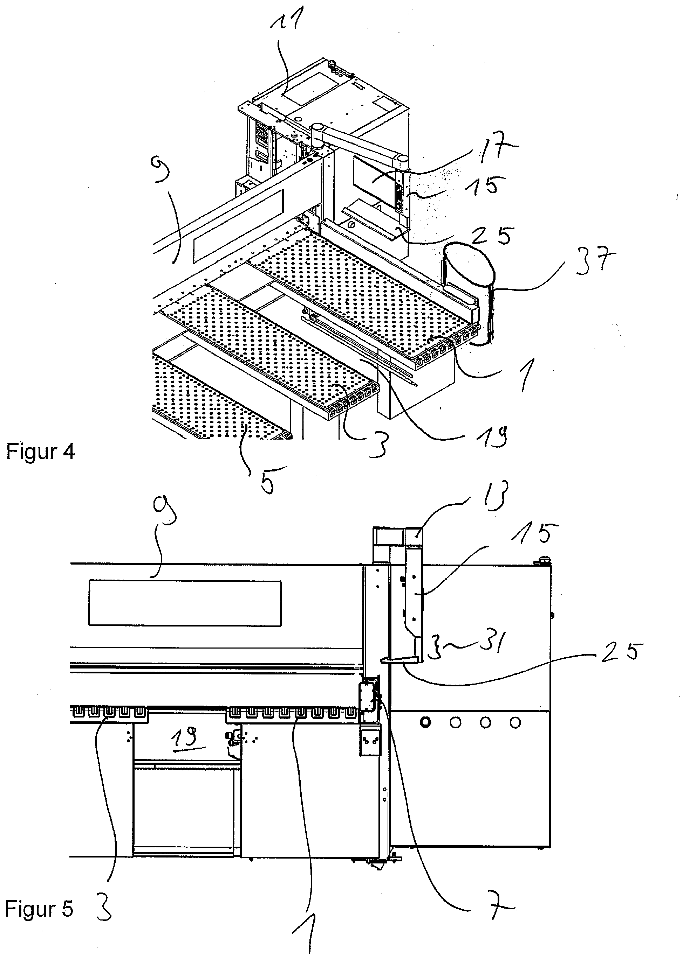

In den Figuren 4 und 5 befinden sich die Schwenkvorrichtung und die Ein- und Ausgabevorrichtung in einer zweiten Schwenkposition und zwar in einem Bereich oberhalb des Winkelbalkens 7. Dabei ist die Darstellungsfläche des Bildschirms bevorzugt im Wesentlichen parallel zur Anlagefläche des Winkelbalkens 7 orientiert. "Im Wesentlichen parallel" bedeutet, dass ein Winkel zwischen der Anlagefläche des Winkelbalkens 7 und der Darstellungsfläche des Bildschirms kleiner 45°, bevorzugt kleiner 30° und weiter bevorzugt kleiner 15° und noch weiter bevorzugt kleiner 5° beträgt.

In der zweiten Schwenkposition ist der Bildschirm 17, welcher das empfindlichste Bauteil der Ein- und Ausgabevorrichtung ist, allseitig geschützt. Aus Sicht des Bedieners (siehe Fig. 4) ist die linke Seite des Bildschirms von der Druckbalkenverkleidung 9, die obere Seite durch den oberen Schwenkarm/den Galgen 13, die rechte Seite durch das bevorzugt robuste Zentralmodul 15 und die untere Seite durch die Tastaturablage 25 gegenüber unabsichtlichen Beschädigungen geschützt. Dies bedeutet, dass im rauen Produktionsalltag der Bildschirm in der zweiten Schwenkposition gut gegen Beschädigungen insbesondere in Folge des Handhabens der Werkstücke durch den Bediener geschützt ist.

In der betrieblichen Praxis wird ferner oftmals ein Abfallbehälter 37 rechts von dem Winkelbalken 7 und in Bezug auf die Blickrichtung von Fig. 4 hinter dem Abnahmetisch 1 aufgestellt. Verschnitt wird von dem Maschinenbediener, der sich in der Gasse 19 befindet, an der Ein- und Ausgabevorrichtung vorbei in den Abfallbehälter 37 geworfen. Dabei kann es vorkommen, dass der Verschnitt die Ein- und Ausgabevorrichtung trifft. Durch die Positionierung des Zentralmoduls 15 rechts vom Bildschirm 17 kann das Zentralmodul 15 im Einzelfall fehlgeworfene Verschnittstücke abfangen und somit den weiter links angeordneten Bildschirm 17 wirksam vor Beschädigungen schützen.

In der Figur 5 ist eine Ansicht von vorne auf die Plattenaufteilsäge dargestellt, wobei sich die Schwenkvorrichtung und die Ein- und Ausgabevorrichtung, wie in der Figur 4, auch in der zweiten Schwenkposition befinden. In dieser Ansicht ist gut zu erkennen, dass sich die gesamte Ein- und Ausgabevorrichtung (Zentralmodul 15, Bildschirm 17 (nicht sichtbar in der Figur 5) und die Tastaturablage 25) vertikal betrachtet oberhalb des Winkelbalkens 7 und horizontal betrachtet bevorzugt rechts vom Winkelbalken 7 befindet.

"Rechts vom Winkelbalken 7" bedeutet ferner, dass die Ein-und Ausgabevorrichtung nicht oberhalb des ersten Abnahmetisches 1, sondern außerhalb der Gesamtfläche der Abnahmetische 1, 3, 5 positioniert ist.

Dies bedeutet, dass der Arbeitsraum oberhalb des ersten Abnahmetisches 1, d.h. links des Winkelbalkens 7 in der Figur 5, von der Ein- und Ausgabevorrichtung nicht gestört wird. Hier kann der Maschinenbediener frei mit den Werkstücken arbeiten. Die Ein- und Ausgabevorrichtung stellt keine Störkontur dar.

In dieser Ansicht ist auch zu erkennen, dass sich die Hinterkante der Tastaturablage 25 und die Hinterseiten des Zentralmoduls 25 und der an ihm befestigten Bildschirmaufnahme 27 (nicht sichtbar in der Figur 5) in einer Ebene befinden.

Die zweite Schwenkposition wird in der Regel dann bevorzugt, wenn eine manuelle Verarbeitung von Platten erfolgt. Dann wird über die Tastatur oder den Bildschirm beispielsweise die Breite eines zu schneidenden Plattenstreifens, eingegeben. Anschließend wird das Plattenmaterial an dem Winkelbalken 7 angelegt und vom Maschinenbediener unter den Druckbalken in Richtung der Säge geschoben.

Bei der manuellen Verarbeitung von Platten ist es einerseits möglich, die Ein- und Ausgabevorrichtung völlig aus dem Arbeitsbereich oberhalb der Abnahmetische 1, 3 und 5 herauszuschwenken. Andererseits ist es trotzdem gut möglich, die gewünschten Eingaben über die Tastatur bzw. ein Touch Display vorzunehmen.

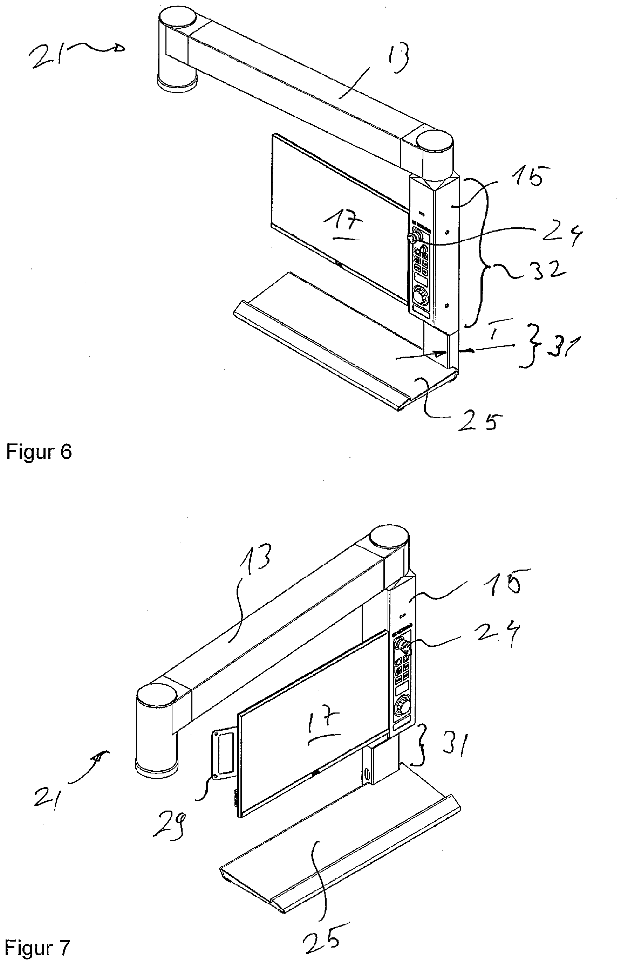

In den Figuren 6 bis 9 sind verschiedene Ansichten ein- und derselben Schwenkvorrichtung mit einem oberen Schwenkarm/einem Galgen 13 mit Ein- und Ausgabevorrichtung dargestellt. Anhand dieser Figuren soll nun der Aufbau einer Ein- und Ausgabevorrichtung etwas näher erläutert werden.

Wie sich aus den Figuren gut entnehmen lässt, ist an einem dem Anlenkpunkt 21 gegenüberliegenden Ende der Schwenkvorrichtung das Zentralmodul 15 ebenfalls schwenkbar angeordnet. Die Schwenkachsen des Anlenkpunkts 21 und des Zentralmoduls 15 verlaufen bevorzugt parallel zueinander.

In den Figuren 6 und 7 ist auch gut zu erkennen, dass das Zentralmodul 15 ein bevorzugter Bestandteil der Ein- und Ausgabevorrichtung ist. Es umfasst bevorzugt mehrere Bedienelemente (Knöpfe, Schalter und Taster); unter anderem auch den bereits erwähnten Not-Aus-Taster 24. Zusammen mit den Eingabemöglichkeiten einer Tastatur oder eines Touch-Screens 17 kann die Plattenaufteilsäge über die Ein- und Ausgabevorrichtung gesteuert werden.

An der dem Bildschirm 17 gegenüberliegenden Seite des Zentralmoduls 15 ist eine mechanische Schnittstelle (hier in Form von zwei Gewindebohrungen ohne Bezugszeichen in Fig. 8 dargestellt) vorgesehen. Mit ihrer Hilfe können Zubehörteile, wie ein Zettelhalter, einen Halter für Barcodescanner, Tablets oder dergleichen, an dem Zentralmodul 15 angebracht werden.

Der Bildschirmaufnahme 27 weist an ihrem dem Zentralmodul gegenüberliegenden Ende bevorzugt einen Griff 29 auf. Mit Hilfe des Griffs 29 ist es möglich, die Ein- und Ausgabevorrichtung in die gewünschte Schwenkposition zu bewegen. Gut zu erkennen ist in den Figuren 6 und 7 auch, dass das Zentralmodul 15 in einem Bereich 31, der sich unterhalb des Bildschirms 17 und oberhalb der Tastaturablage 25 befindet, eine gegenüber einem Bereich 32 des Zentralmoduls 15 reduzierte Tiefe aufweist. Dadurch kann eine Tastatur über die gesamte Länge der Tastaturablage 25 auf dieser aufgelegt und der Platzbedarf bzw. das Bauraumvolumen für die Tastaturablage 25 verringert werden.

Die Figuren 8 und 9 zeigen zwei Isometrien der Ein- und Ausgabevorrichtung von hinten. In den Figuren 8 und 9 ist die Bildschirmaufnahme 27, welche den Bildschirm 17 trägt, sichtbar. Er ist vorteilhafterweise in der Höhe verstellbar an dem Zentralmodul 15 befestigt. Das kann durch Langlöcher oder eine Linearführung erfolgen. Außerdem ist der Bildschirmaufnahme 27 schwenkbar um eine Achse, die horizontal verläuft, an dem Zentralmodul 15 befestigt. Diese Schwenkachse ist durch eine strichpunktierte Linie 33 angedeutet. Dadurch kann man die Ausrichtung des Bildschirms innerhalb eines Winkelbereichs von beispielsweise +/-5° einstellen. Damit können in vielen Fällen Blendeffekte durch Sonnenlicht oder andere Lichtquellen eliminiert werden und ein ermüdungsfreies Arbeiten bzw. Betrachten des Bildschirms ist möglich.

In einem weiteren nicht dargestellten Ausführungsbeispiel kann der Bildschirmaufnahme 27 auch in ein Gehäuse des Bildschirms 17 integriert sein.

Aus der Figur 9 kann man erkennen, dass an der Unterseite der Tastaturablage 25 eine Griffmulde 35 vorhanden ist, so dass auch durch Greifen der Tastaturablage 25 die Ein- und Ausgabevorrichtung in die gewünschte Position gebracht werden kann.

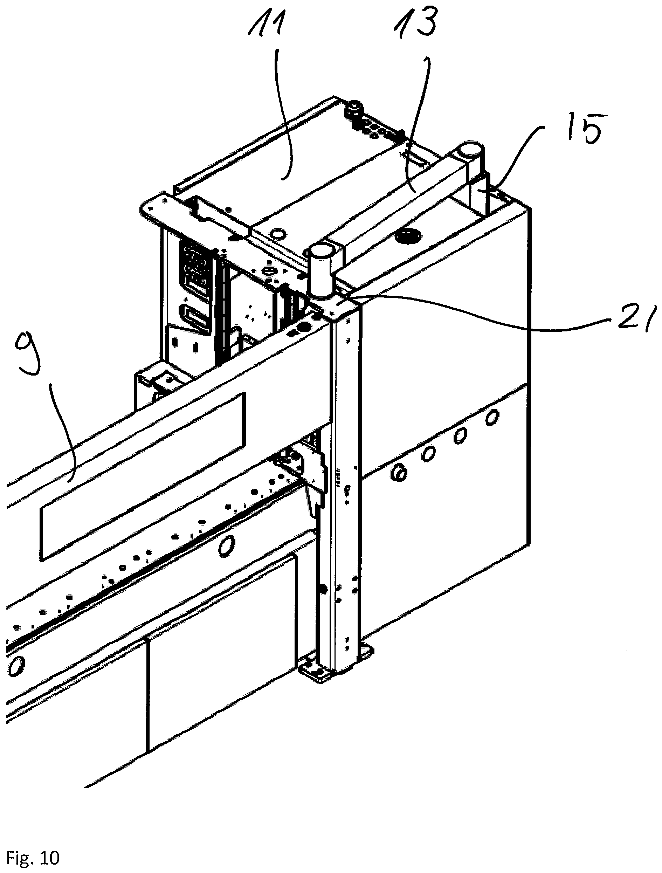

In der Figur 10 ist ein Teil einer erfindungsgemäßen Plattenaufteilsäge dargestellt. Anhand der Figur 10 wird eine Transportstellung der Schwenkvorrichtung illustriert. Die Schwenkvorrichtung wird in die Transportstellung geschwenkt, wenn die Plattenaufteilsäge transportiert wird. Dargestellt sind in der Figur 10 ein Teil der Druckbalkenverkleidung 9 sowie des Maschinengestells. Beim Transport der Plattenaufteilsäge sind die Abnahmetische 1, 3 und 5 und der Winkelbalken nicht am Maschinengestell montiert; sie sind daher nicht dargestellt.

Der Schaltschrank oder bzw. die Steuerung 11 sind auch beim Transport mit dem Maschinengestell verbunden.

Beim Transport wird der obere Schwenkarm / der Galgen 13 so verschwenkt, dass die an ihm befestigte Bildschirmaufnahme "hinter" dem Schaltschrank / der Steuerung 11 verschwindet. in der Figur 10 ist nur der oberste Teil des Zentralmoduls 15 sichtbar. Die anderen Teile am Galgen befestigten Bauteile (Bildschirmaufnahme, Tastaturablage, ...) werden von dem Schaltschrank 11 verdeckt. Der Schaltschrank 11 schützt in der Transportstellung die Bildschirmaufnahme und einen an ihr befestigten Bildschirm vor Beschädigungen. Außerdem ragen Schwenkarm, Bildschirmaufnahme, die optionale Tastaturablage und das Zentralmodul nur wenig oder gar nicht über den Schaltschrank 11 hinaus. In Folge nimmt die Plattenaufteilsäge beim Transport nur wenig Platz ein, und die Gefahr, dass die Schwenkvorrichtung mit den daran befestigten Bauteilen beim Transport beschädigt wird, ist gering.

Die Transportposition kann eingenommen werden, wenn der Galgen 13 so lang ist, dass die Bildschirmaufnahme (ausgehend von der ersten oder zweiten Schwenkposition) um den Schaltschrank herumgeschwenkt werden kann. In dem dargestellten Ausführungsbeispiel ist der Anlenkpunkt 21 am Maschinengestell der Plattenaufteilsäge befestigt. Daher muss der Schwenkarm bei dieser Konstellation länger als eine Breite des Schaltschranks 13 sein.

Wenn der Anlenkpunkt 21 am Schaltschrank 13 befestigt ist, kann der Schwenkarm kürzer als eine Breite des Schaltschranks 13 sein.

### Bezugszeichenliste

1, 3, 5 Abnahmetisch
7 Winkelbalken
9 Druckbalkenverkleidung
11 Schaltschrank/Steuerung
13 Oberer Schwenkarm/Galgen
15 Zentralmodul
16 mittlerer Bereich des Bildschirms
17 Bildschirm
18 Ebene
19 Gasse
21 Anlenkpunkt
23 Schwenkachse
24 Not-Aus-Taster
25 Tastaturablage
27 Bildschirmaufnahme
29 Griff
31 Bereich
32 Bereich
33 Schwenkachse
35 Griffmulde oder -leiste

## Patentansprüche

1. Plattenaufteilsäge umfassend mindestens zwei Abnahmetische (1, 3, 5), eine Druckbalkenverkleidung (9), einen Winkelbalken (7), eine Schwenkvorrichtung und eine Bildschirmaufnahme (27) für einen Bildschirm (17), wobei der Winkelbalken (7) orthogonal zu der Druckbalkenverkleidung (9) angeordnet ist, wobei die Schwenkvorrichtung an einem Anlenkpunkt (21) schwenkbar gelagert ist, und wobei die Bildschirmaufnahme (27) an einem dem Anlenkpunkt (21) gegenüberliegenden Ende der Schwenkvorrichtung schwenkbar gelagert ist, **dadurch gekennzeichnet, dass** die Lage des Anlenkpunkts (21) relativ zu der Druckbalkenverkleidung (9) und relativ zu dem Winkelbalken (7) sowie eine Länge (L_{G}) der Schwenkvorrichtung so aufeinander abgestimmt sind, dass
• die Bildschirmaufnahme (27) in einer ersten Schwenkposition der Schwenkvorrichtung zwischen zwei benachbarten Abnahmetischen (1, 3) sowie vor der Druckbalkenverkleidung (9) positioniert ist, und dass
• die Bildschirmaufnahme (27) in einer zweiten Schwenkposition parallel zum Winkelbalken (7) und in der Nähe des Winkelbalkens (7) positioniert ist.

2. Plattenaufteilsäge nach Anspruch 1, **dadurch gekennzeichnet, dass** die Schwenkvorrichtung ein Zentralmodul (15) umfasst.

3. Plattenaufteilsäge nach Anspruch 1 oder 2, **dadurch gekennzeichnet, dass** die Schwenkvorrichtung einen oberen Schwenkarm (13) oder/und einen unteren Schwenkarm (13) umfasst.

4. Plattenaufteilsäge nach Anspruch 2 oder 3, **dadurch gekennzeichnet, dass** das Zentralmodul (15) an dem oberen Schwenkarm (13) oder/und dem unteren Schwenkarm angeordnet ist.

5. Plattenaufteilsäge nach einem der Ansprüche 2 bis 4, **dadurch gekennzeichnet, dass** die Bildschirmaufnahme (27) an dem Zentralmodul (15) angeordnet ist.

6. Plattenaufteilsäge nach einem der vorhergehenden Ansprüche, **dadurch gekennzeichnet, dass** die Bildschirmaufnahme (27) in der Höhe verstellbar und um eine horizontal verlaufende Achse (33) schwenkbar mit der Schwenkvorrichtung oder mit dem Zentralmodul (15) verbunden ist.

7. Plattenaufteilsäge nach einem der Ansprüche 2 bis 6, **dadurch gekennzeichnet, dass** an dem Zentralmodul (15) unterhalb der Bildschirmaufnahme (27) eine Tastaturablage (25) vorgesehen ist.

8. Plattenaufteilsäge nach Anspruch 7, **dadurch gekennzeichnet, dass** eine Tiefe (T) des Zentralmoduls (15) in einem Bereich (31) oberhalb der Tastaturablage (25) kleiner ist als im Bereich der Bildschirmaufnahme (27).

9. Plattenaufteilsäge nach einem der vorhergehenden Ansprüche, **dadurch gekennzeichnet, dass** die Länge des oberen Schwenkarms (13) oder/und des unteren Schwenkarms größer als eine Länge der Bildschirmaufnahme (27) und/oder der Tastaturablage (25) ist.

10. Plattenaufteilsäge nach einem der vorhergehenden Ansprüche, **dadurch gekennzeichnet, dass** die Länge des oberen Schwenkarms (13) oder/und des unteren Schwenkarms größer oder gleich einer Breite des ersten Aufnahmetisches (1) ist.

11. Plattenaufteilsäge nach einem der vorhergehenden Ansprüche, **dadurch gekennzeichnet, dass** der Anlenkpunkt (21) der Schwenkvorrichtung an der Plattenaufteilsäge oder einem separaten Mast angeordnet ist, und dass der Mast gerade oder gekröpft sein kann.

12. Plattenaufteilsäge nach einem der Ansprüche 2 bis 11, **dadurch gekennzeichnet, dass** sich die Bildschirmaufnahme (27) in der zweiten Schwenkposition zwischen dem Zentralmodul (15) und dem Anlenkpunkt (21) der Schwenkvorrichtung befindet.

13. Plattenaufteilsäge nach einem der vorhergehenden Ansprüche, **dadurch gekennzeichnet, dass** die Bildschirmaufnahme (27) und die optionale Tastaturablage (25) in der ersten Schwenkposition parallel zur Druckbalkenverkleidung (9) ausgerichtet sind.

14. Plattenaufteilsäge nach einem der vorhergehenden Ansprüche, **dadurch gekennzeichnet, dass** die Bildschirmaufnahme (27) und die optionale Tastaturablage (25) in der zweiten Schwenkposition parallel zum Winkelbalken (7) ausgerichtet sind.

15. Plattenaufteilsäge nach einem der vorhergehenden Ansprüche, **dadurch gekennzeichnet, dass** sich Bildschirmaufnahme (27) und/oder der Tastaturablage (25) in der ersten Schwenkposition in vertikaler Richtung über einem Sicherheitsvorhang und seinem Bewegungsbereich befinden.

16. Plattenaufteilsäge nach einem der Ansprüche 2 bis 15, **dadurch gekennzeichnet, dass** an dem Zentralmodul (15) mindestens folgende Bedienelemente angeordnet sind: Schalter zum Ein-und Aschalten der Steuerspannung, ein Schalter oder Taster "Ablaufstart", ein Schalter oder Taster "Ablaufstopp" ein Not-Aus-Taster, ein Taster "Fehlerquittierung".
